# EUROPEAN PATENT APPLICATION

(11) **EP 4 485 561 A1**
(43) Date of publication of application: **01.01.2025**
(21) Application number: 22933984.1
(22) Date of filing: 29.03.2022
(51) Int. Cl.: H01M 4/133, H01M 4/134, H01M 10/0525

(54) **NEGATIVE ELECTRODE PLATE, ELECTROCHEMICAL APPARATUS, AND ELECTRONIC DEVICE**

(71) Applicant: Ningde Amperex Technology Limited, Ningde, Fujian 352100 (CN)
(72) Inventor: REN, Wenchen, Ningde, Fujian 352100 (CN)
(74) Representative: Klunker IP Patentanwälte PartG mbB
(86) International application number: PCT/CN2022/083535
(87) International publication number: WO 2023/184127

(57) **Abstract**

This application discloses a negative electrode plate, an electrochemical device, and an electronic device. The negative electrode plate includes a negative current collector and a negative active material layer located on at least one side of the negative current collector. The negative active material layer includes a carbon-containing silicon-oxygen composite particle. An X-ray diffraction pattern of the negative electrode plate satisfies: 1 ≤ I₁/I₂ ≤ 3, where I₁ is an intensity of a highest characteristic diffraction peak corresponding to a diffraction angle 2θ of 31.9±0.5°, and I₂ is an intensity of a highest characteristic diffraction peak corresponding to 2θ of 21.5±0.5°. This application can reduce the volume expansion rate of the negative active material particles in the negative active material layer, enhance active ion conductivity of the negative electrode plate, and in turn, enhance the cycle capacity retention rate, C-rate performance, and cycle stability of a secondary battery.

## Description

### TECHNICAL FIELD

This application relates to the technical field of secondary batteries, and in particular, to a negative electrode plate, an electrochemical apparatus, and an electronic device.

### BACKGROUND

Secondary batteries are prominently characterized by a high energy density, a long cycle life, no pollution, no memory effect, and the like. Used as a clean energy source, the secondary batteries have been gradually applied to a wide range of fields from electronic products to large-sized devices such as an electric vehicle to meet the strategy of sustainable development of the environment and energy. This imposes higher requirements on the energy density of the secondary batteries.

Among the multitudinous negative active materials, the silicon (Si) negative electrode material is eye-catching due to a much higher theoretical capacity than a carbon material.

However, the silicon negative electrode material incurs a severe volume effect, and produces a huge amount of volume contraction and expansion during charging or discharging. Therefore, the silicon negative electrode material is highly prone to break during charging or discharging, thereby being unable to form a stable SEI film on the surface of the negative electrode plate. Therefore, when applied in a secondary battery, the silicon negative electrode material is prone to cause depletion of an electrolyte solution and pulverization of the negative electrode film layer, thereby leading to capacity fading of the secondary battery, and reducing the C-rate performance and cycle stability of the secondary battery.

An objective of this application is to provide a negative electrode plate, an electrochemical device, and an electronic device to reduce the volume expansion rate of the negative active material particles in a negative active material layer, enhance active ion conductivity of the negative electrode plate, and in turn, enhance the cycle capacity retention rate, C-rate performance, and cycle stability of a secondary battery.

A first aspect of this application provides a negative electrode plate. The negative electrode plate includes a negative current collector and a negative active material layer located on at least one side of the negative current collector.

The negative active material layer includes a carbon-containing silicon-oxygen composite particle.

An X-ray diffraction pattern of the negative electrode plate satisfies: 1 ≤ I₁/I₂ ≤ 3, where I₁ is an intensity of a highest characteristic diffraction peak corresponding to a diffraction angle 2θ of 31.9±0.5°, and I₂ is an intensity of a highest characteristic diffraction peak corresponding to 2θ of 21.5±0.5°.

In the carbon-containing silicon-oxygen composite particle, the C atom is able to replace a Si-O bond in the SiOₓ particle to form a Si-C bond and an O-C bond. In this way, the number of Si-O bonds is reduced, thereby reducing the number of Si-Si bonds formed after breakage of the Si-O bonds, and in turn, avoiding the negative electrode material particles from expanding and rupturing due to excessive stress in a Si-atom-rich region. In addition, the negative active material layer of the negative electrode plate includes the carbon-containing silicon-oxygen composite particle, and the X-ray diffraction pattern of the negative electrode plate satisfies the above conditions. Therefore, this application can effectively reduce the volume expansion rate of the negative active material particles, enhance active ion conductivity of the negative electrode plate, and in turn, enhance the cycle capacity retention rate, C-rate performance, and cycle stability of a secondary battery.

In any embodiment of this application, the X-ray diffraction pattern of the carbon-containing silicon-oxygen composite particle satisfies: I₃/I₄ ≤ 2, where I₃ is an intensity of a highest characteristic diffraction peak corresponding to 2θ of 28.3±0.5°, and I₄ is an intensity of a highest characteristic diffraction peak corresponding to 2θ of 22.5±0.3°. When the X-ray diffraction pattern of the carbon-containing silicon-oxygen composite particle satisfies the above conditions, silicon microcrystals of an appropriate size can be formed during the charge-discharge cycle of the secondary battery. In a case that the silicon microcrystals are of an appropriate size, the negative active material particles can exhibit a relatively low volume expansion rate, thereby reducing the risk of expansion and rupture of the negative active material particles. Therefore, the negative electrode plate applied to the secondary battery can make the secondary battery exhibit a high cycle capacity retention rate, high C-rate performance, and high cycle stability.

In any embodiment of this application, a Raman spectrum of the carbon-containing silicon-oxygen composite particle satisfies: I_{D} > I_{G}, where I_{D} is an intensity of a D-band peak, and I_{G} is an intensity of a G-band peak, and optionally 1.1 ≤ I_{D}/I_{G} ≤ 2.0. When the intensity of the D-band peak and the intensity of the G-band peak satisfy the above conditions, it is deemed that the carbon-containing silicon-oxygen composite particle is doped with carbon falling within an appropriate content range, and the carbon-containing silicon-oxygen composite particle can exhibit an appropriate structure. With this appropriate structure, the ratio between the Si-O bond, the Si-C bond, and the O-C bond is appropriate, and the negative electrode material particles can exhibit a lower volume expansion rate during the charge-discharge cycle of the secondary battery. Therefore, the secondary battery that employs the negative electrode plate can exhibit a high cycle capacity retention rate, high C-rate performance, and high cycle stability.

In any embodiment of this application, in any region in which the negative active material layer includes the carbon-containing silicon-oxygen composite particle, based on a total mass of carbon, silicon and oxygen, a content of carbon is 0.5% to 10%. In the negative active material layer, the distribution of the carbon, silicon, and oxygen satisfies the above conditions. Therefore, the ratio between the Si-O bond, the Si-C bond, and the O-C bond is made appropriate, and the negative electrode material particles can exhibit a lower volume expansion rate during the charge-discharge cycle of the secondary battery. Therefore, the secondary battery that employs the negative electrode plate can exhibit a high cycle capacity retention rate, high C-rate performance, and high cycle stability.

In any embodiment of this application, at least a partial region on a surface of the carbon-containing silicon-oxygen composite particle further includes a coating layer. The coating layer includes at least one of a conductive polymer, a carbon material, or an oxide MeO_{z}, where Me is a metal element and z = 0.5 to 3.

In any embodiment of this application, the conductive polymer includes one or more of polyvinylidene difluoride or a derivative thereof, carboxymethyl cellulose or a derivative thereof, polyvinylpyrrolidone or a derivative thereof, polyvinyl alcohol or a derivative thereof, polyacrylic acid or a derivative thereof, styrene-butadiene rubber, polyacrylamide, polyimide, PEDOT:PSS or a derivative thereof, or polyamideimide.

In any embodiment of this application, the carbon material includes one or more of carbon fibers, carbon nanotubes, graphene, graphite, or amorphous carbon.

In any embodiment of this application, Me includes at least one of Mg, Al, Ti, Zn, Ni, Mn, V, Cr, Co, or Zr.

In any embodiment of this application, a thickness of the coating layer is 0.1 nm to 10 nm. Optionally, the thickness of the coating layer is 1 nm to 3 nm.

In any embodiment of this application, a volume average particle size Dv₅₀ of the carbon-containing silicon-oxygen composite particle is 2.5 µm to 10 µm, and a length-number mean diameter Dn₁₀ of the carbon-containing silicon-oxygen composite particle and the Dv₅₀ satisfy 0.3 ≤ Dn₁₀/Dv₅₀ <_ 0.6.

In any embodiment of this application, a powder compaction density of the carbon-containing silicon-oxygen composite particle under a 5000 kg pressure is 1.21 g/cm³ to 1.50 g/cm³.

A second aspect of this application provides an electrochemical device. The electrochemical device includes the negative electrode plate according to the first aspect of this application.

In any embodiment of this application, the electrochemical device is a lithium-ion battery.

A third aspect of this application provides an electronic device. The electronic device includes the electrochemical device according to the second aspect of this application.

### BRIEF DESCRIPTION OF DRAWINGS

To describe the technical solutions of some embodiments of this application more clearly, the following outlines the drawings to be used in some embodiments of this application. Evidently, the drawings outlined below are merely a part of embodiments of this application.

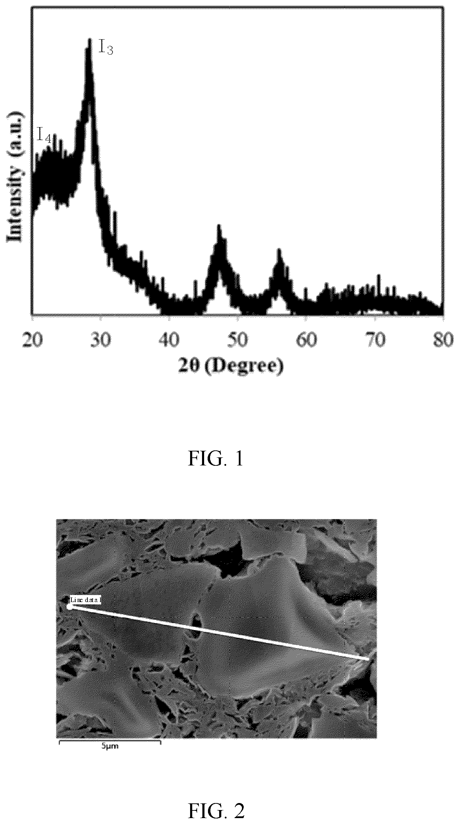

FIG. 1 is an XRD pattern of negative active material particles according to an embodiment of this application;
FIG. 2 is a scanning electron microscope (SEM) image of a cross-section of negative active material particles according to an embodiment of this application;

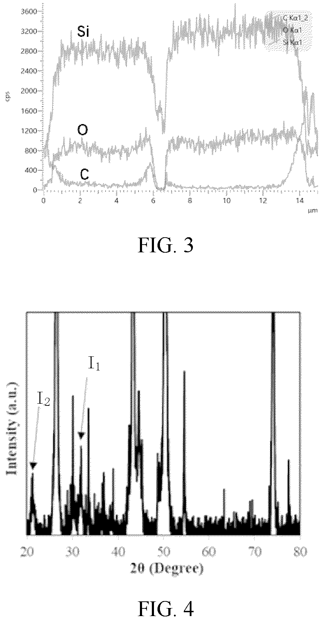

FIG. 3 is an elemental line distribution curve obtained by linear scanning performed based on labeling in the SEM image of the cross-section of the negative active material particles in FIG. 2 of this application; and
FIG. 4 is an XRD pattern of a negative electrode plate according to an embodiment of this application.

### DETAILED DESCRIPTION OF EMBODIMENTS

To make the objectives, technical solutions, and beneficial effects of this application clearer, the following describes this application in further detail with reference to embodiments. Understandably, the embodiments described in this specification are merely intended for interpreting this application but not intended to limit this application.

For brevity, just some of numerical ranges are expressly disclosed herein. However, any lower limit may be combined with any upper limit to form an unspecified range, any lower limit may be combined with any other lower limit to form an unspecified range, and any upper limit may be combined with any other upper limit to form an unspecified range. In addition, although not explicitly stated, any point and any single numerical value between end points of a range are included in the range. Therefore, each point or each single numerical value may be used as a lower limit or upper limit of the range to combine with any other point or other single numerical value or with any other lower or upper limit to form an unspecified range.

It is hereby noted that in the description herein, unless otherwise specified, a range defined by a numerical value qualified by "at least" or "at most" includes this numerical value, and the word "more" in the phrase "one or more of" means at least two.

Unless otherwise specified, the terms used in this application have the well-known meanings commonly understood by a person skilled in the art. Unless otherwise specified, the value of a parameter mentioned in this application may be measured by using a measurement method commonly used in the art (for example, may be tested according to the method described in an embodiment of this application).

The term "approximately" is intended to describe and represent small variations. When used together with an event or situation, the term "approximately" may represent an example in which the event or situation occurs exactly or an example in which the event or situation occurs very approximately. For example, when used together with a numerical value, the term "approximately" may represent a variation range falling within ±10% of the numerical value, such as ±5%, ±4%, ±3%, ±2%, ±1%, ±0.5%, ±0.1%, or ±0.05% of the numerical value. In addition, a quantity, a ratio, or another numerical value herein is sometimes expressed in the format of a range. Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified.

Alist of items referred to by the terms such as "at least one of", "at least one thereof", "at least one type of" may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

The above summary of this application is not intended to describe every disclosed embodiment or every implementation of this application. The following description exemplifies illustrative embodiments in more detail. In several places throughout this application, guidance is provided through a series of embodiments. The embodiments may be used in various combinations. In each instance, an enumerated list serves merely as a representative list, but is not to be construed as an exclusive list.

As mentioned in the background technology above, although with a high theoretical capacity, the silicon negative electrode material exhibits a severe volume effect. When applied in a secondary battery, the silicon negative electrode material is prone to cause depletion of an electrolyte solution and pulverization of the negative electrode film layer, thereby leading to capacity fading of the secondary battery, and reducing the C-rate performance and cycle stability of the secondary battery.

A silicon suboxide (SiOₓ, 0.8 ≤ x ≤ 1.2) negative electrode material can generate a buffering material such as lithium silicate or lithium oxide during lithiation in initial charging, thereby slowing down the volume expansion of the negative electrode material during charging and discharging, and in turn, incurring a lower volume effect than a silicon negative electrode material. However, the volume effect of silicon suboxide is still unable to meet the expectations of the market for negative electrode materials.

Currently, most of the techniques for further reducing the volume effect of silicon suboxide are disproportionation, surface coating, or nanocrystallization for the silicon suboxide. Among such techniques, disproportionation is to transform a part of the silicon suboxide into quartz-phase SiO₂ and Si nanocrystals at high temperatures. SiO₂ covers the surface of the Si nanocrystals to serve as a buffer against the volume expansion of the Si nanocrystals during lithiation. Surface coating is to coat the surface of the SiOₓ with a metal oxide, a polymer, or the like to prevent particle rupture by using the binding effect of the coating layer to resist the stress generated during the volume expansion of the SiOₓ. Both techniques are to restrict the volume expansion of Si during lithiation by constructing a buffering region. However, with the increase in the number of charge-discharge cycles, the structure of the buffering region will be cracked or even collapsed due to repeated stress. Consequently, the negative electrode material particles are broken, thereby resulting in a capacity loss of the secondary battery, and decreasing the C-rate performance and cycle stability of the secondary battery. Nanocrystallization for the SiOₓ can reduce the volume expansion rate of the SiOₓ, thereby solving the problem of excessive volume expansion of the negative electrode material during lithiation. However, the nanocrystallized SiOₓ consumes a large amount of electrolyte solution due to a large specific surface area, and forms a relatively thick SEI film accordingly, thereby adversely affecting the first-cycle Coulombic efficiency and cycle performance of the secondary battery.

To solve the above problem, through in-depth thinking and experiments, the applicant hereof provides a negative electrode plate. The negative electrode plate is applied to a secondary battery to endow the secondary battery with a high cycle capacity retention rate and good electrochemical performance.

### Negative electrode plate

Through in-depth thinking and experiments, the applicant hereof provides a negative electrode plate. The negative electrode plate includes a negative current collector and a negative active material layer located on at least one side of the negative current collector. The negative active material layer includes a carbon-containing silicon-oxygen composite particle. An X-ray diffraction (XRD) pattern of the negative active material layer satisfies: 1 ≤ I₁/I₂ ≤ 3, where I₁ is an intensity of a highest characteristic diffraction peak corresponding to a diffraction angle 2θ of 31.9±0.5°, and I₂ is an intensity of a highest characteristic diffraction peak corresponding to 2θ of 21.5±0.5°.

The carbon-containing silicon-oxygen composite particle is not limited herein. The carbon-containing silicon-oxygen composite particle may be a silicon suboxide particle with a bulk phase doped with atomic-scale carbon. In some embodiments, the carbon-containing silicon-oxygen composite particle may be a composite particle obtained by doping the bulk phase of the SiOₓ with carbon. Optionally, in the carbon-containing silicon-oxygen composite, the mass pencentage of carbon may be 0.5% to 10%. For example, the mass pencentage of carbon in the carbon-containing silicon-oxygen composite may be 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a value falling within a range formed by any two thereof. Preferably, the carbon-containing silicon-oxygen composite particle may be a SiCₓO_{y} particle, where 0 < x < 0.04 and 0.8 < y < 1.2.

Without intending to be limited by any theory or explanation, the applicant finds that, in the carbon-containing silicon-oxygen composite particle, the C atom is able to replace a Si-O bond in the SiOₓ particle to form a Si-C bond and an O-C bond. In this way, the number of Si-O bonds is reduced, thereby reducing the number of Si-Si bonds formed after breakage of the Si-O bonds, and in turn, avoiding the negative electrode material particles from expanding and rupturing due to excessive stress in a Si-atom-rich region. In addition, although the underlying mechanism still remains unclear, the applicant hereof unexpectedly finds that, if the negative active material layer of the negative electrode plate includes the carbon-containing silicon-oxygen composite particle, and the X-ray diffraction pattern of the negative electrode plate satisfies the above conditions, then the volume expansion rate of the negative active material particles can be reduced effectively reduced, the active ion conductivity of the negative electrode plate can be enhanced, and in turn, the cycle capacity retention rate, C-rate performance, and cycle stability of the secondary battery can be enhanced. Specifically, when the X-ray diffraction pattern of the negative electrode plate satisfies the above conditions, the negative electrode plate can contain specified constituents such as silicate salts of different structures added at a specified mass pencentage. These specified constituents can not only suppress the expansion of the silicon microcrystals, but also facilitate the mass transfer process in an electrochemical reaction, thereby enhancing the cycle capacity retention rate, C-rate performance, and cycle stability of the secondary battery.

In some embodiments, the X-ray diffraction pattern of the carbon-containing silicon-oxygen composite particle may satisfy: I₃/I₄ ≤ 2, for example, 0 ≤ I₃/I₄ ≤ 2, 0.5 ≤ I₃/I₄ ≤ 1.8, 0.8 ≤ I₃/I₄ ≤ 1.5, or 1.0 ≤ I₃/I₄ ≤ 1.2. I₃ is an intensity of a highest characteristic diffraction peak corresponding to a diffraction angle 2θ of 28.3±0.5°, and I₄ is an intensity of a highest characteristic diffraction peak corresponding to 2θ of 22.5±0.3°.

The magnitude of the I₃/I₄ ratio value reflects the degree of disproportionation of the carbon-containing silicon-oxygen composite particle. The lower the I₃/I₄ ratio value, the larger the size of the silicon microcrystal grains inside the negative active material. Without intending to be limited by any theory or explanation, when the X-ray diffraction pattern of the carbon-containing silicon-oxygen composite particle satisfies the above conditions, silicon microcrystals of an appropriate size can be formed during the charge-discharge cycle of the secondary battery. In a case that the silicon microcrystals are of an appropriate size, the negative active material particles can exhibit a relatively low volume expansion rate, thereby reducing the risk of expansion and rupture of the negative active material particles. Therefore, the negative electrode plate applied to the secondary battery can make the secondary battery exhibit a high cycle capacity retention rate, high C-rate performance, and high cycle stability.

In some embodiments, a Raman spectrum of the carbon-containing silicon-oxygen composite particle may satisfy: I_{D} > I_{G}, where I_{D} is an intensity of a D-band peak, and I_{G} is an intensity of a G-band peak. Optionally, the Raman spectrum of the carbon-containing silicon-oxygen composite particle satisfies 1.1 ≤ I_{D}/I_{G} ≤ 2.0, for example, 1,1 ≤ I_{D}/I_{G} ≤ 2.0, 1.3 ≤ I_{D}/I_{G} ≤ 2.0, 1.5 ≤ I_{D}/I_{G} ≤ 2.0, 1.7 ≤ I_{D}/I_{G} ≤ 2.0, 1.9 ≤ I_{D}/I_{G} ≤ 2.0, 1.1 ≤ I_{D}/I_{G} ≤ 1.8, 1.3 ≤ I_{D}/I_{G} ≤ 1.8, 1.5 ≤ I_{D}/I_{G} ≤ 1.8, 1.7 ≤ I_{D}/I_{G} ≤ 1.8, 1.1 ≤ I_{D}/I_{G} ≤ 1.6, 1.3 ≤ I_{D}/I_{G} ≤ 1.6, 1.5 ≤ I_{D}/I_{G} ≤ 1.6, 1.1 ≤ I_{D}/I_{G} ≤ 1.4, or 1.3 ≤ I_{D}/I_{G} ≤ 1.4.

Without intending to be limited by any theory or explanation, when the intensity of the D-band peak and the intensity of the G-band peak in the Raman spectrum of the carbon-containing silicon-oxygen composite particle satisfy the above conditions, it is deemed that the carbon-containing silicon-oxygen composite particle is doped with carbon falling within an appropriate content range, and the carbon-containing silicon-oxygen composite particle can exhibit an appropriate structure. With this appropriate structure, the ratio between the Si-O bond, the Si-C bond, and the O-C bond is appropriate, and the negative electrode material particles can exhibit a lower volume expansion rate during the charge-discharge cycle of the secondary battery. Therefore, the secondary battery that employs the negative electrode plate can exhibit a high cycle capacity retention rate, high C-rate performance, and high cycle stability.

In some embodiments, in any region in which the negative active material layer includes the carbon-containing silicon-oxygen composite particle, based on a total mass of carbon, silicon and oxygen, a content of carbon may be 0.5% to 10%. For example, in any region in which the negative active material layer includes the carbon-containing silicon-oxygen composite particle, based on a total mass of carbon, silicon and oxygen, the mass pencentage of carbon may be 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a value falling within a range formed by any two thereof.

Without intending to be limited by any theory or explanation, in the negative active material layer, the distribution of the carbon, silicon, and oxygen satisfies the above conditions. Therefore, the ratio between the Si-O bond, the Si-C bond, and the O-C bond is made appropriate, and the negative electrode material particles can exhibit a lower volume expansion rate during the charge-discharge cycle of the secondary battery. Therefore, the secondary battery that employs the negative electrode plate can exhibit a high cycle capacity retention rate, high C-rate performance, and high cycle stability.

In some embodiments, at least a partial region on a surface of the carbon-containing silicon-oxygen composite particle further includes a coating layer. The coating layer may include at least one of a conductive polymer, a carbon material, or an oxide MeO_{z}, where Me is a metal element and z = 0.5 to 3.

In this embodiment, the coating layer may cover the surface of the carbon-containing silicon-oxygen composite particle by a physical action, or may cover the surface of the carbon-containing silicon-oxygen composite particle by a chemical action, without being limited herein. The coating layer may be a single-layer structure or a multilayer structure. When the coating layer is a single-layer structure, the coating layer may include one or more of a conductive polymer, a carbon material, or an oxide MeO_{z}. When the coating layer is a multilayer structure, each single layer of the coating layer may include one or more of a conductive polymer, a carbon material, or an oxide MeO_{z}.

In some embodiments, the conductive polymer may include one or more of polyvinylidene difluoride (PVDF) or a derivative thereof, carboxymethyl cellulose (CMC) or a derivative thereof, polyvinylpyrrolidone (PVP) or a derivative thereof, polyvinyl alcohol (PVA) or a derivative thereof, polyacrylic acid (PAA) or a derivative thereof, styrene-butadiene rubber (SBR), polyacrylamide (PAM), polyimide (PI), PEDOT:PSS or a derivative thereof, or polyamideimide (PAI).

In some embodiments, the carbon material may include one or more of carbon fibers, carbon nanotubes, graphene, graphite, or amorphous carbon.

In some embodiments, Me in the oxide MeO_{z} may include one or more of Mg, Al, Ti, Zn, Ni, Mn, V, Cr, Co, or Zr. Optionally, Me includes one or more of Mg, Al, or Ni.

Without intending to be limited by any theory or explanation, the applicant finds that the coating layer that covers the surface of the carbon-containing silicon-oxygen composite particle can interact with a functional group on the surface of the carbon-containing silicon-oxygen composite particle to form a three-dimensional conductive network of specified mechanical strength. On the one hand, the three-dimensional conductive network is of specified mechanical strength, and can exert a binding effect to suppress the volume expansion generated by the negative active material particles during lithiation. On the other hand, the three-dimensional conductive network can enhance the conductivity of the negative active material, thereby reducing the surface impedance of the negative electrode plate. In this way, this application can suppress the volume expansion of the negative active material particles, and at the same time, enhance electrical conductivity of the negative active material, and in turn, enhance the cycle capacity retention rate, C-rate performance, and cycle stability of the secondary battery.

Further, in the coating layer on the surface of the carbon-containing silicon-oxygen composite particles, the conductive polymer, the carbon material, and the oxide MeO_{z} are selected from the above appropriate materials, so that the coating layer possesses better mechanical properties and conductive properties. Therefore, this application can further reduce the volume expansion rate of the negative active material particles, enhance electrical conductivity of the negative active material particles, and in turn, enhance the cycle capacity retention rate, C-rate performance, and cycle stability of the secondary battery.

In some embodiments, the thickness of the coating layer may be 0.1 nm to 10 nm. In some embodiments, the thickness of the coating layer may be 1 nm to 3 nm. In some embodiments, the thickness of the coating layer may be 0.5 nm, 0.8 nm, 1 nm, 1.2 nm, 1.5 nm, 1.8 nm, 2 nm, 2.5 nm, 2.8 nm, 3 nm, 3.5 nm, 3.8 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, or a value falling within a range formed by any two thereof.

Without intending to be limited by any theory or explanation, when the thickness of the coating layer falls within the above range, the coating layer can exhibit both good mechanical properties and high electrical conductivity, thereby effectively suppressing the volume expansion of the negative active material particles and improving the electrical conductivity of the negative active material. In addition, when the thickness of the coating layer falls within the above range, the negative electrode plate is endowed with a high energy density, thereby increasing the energy density of the secondary battery.

In some embodiments, a volume average particle size Dv₅₀ of the carbon-containing silicon-oxygen composite particle is 2.5 µm to 10 µm, and a length-number mean diameter Dn₁₀ of the carbon-containing silicon-oxygen composite particle and the Dv₅₀ may satisfy 0.3 ≤ Dn₁₀/Dv₅₀ <_ 0.6. For example, the Dn₁₀/Dv₅₀ ratio may be 0.3, 0.35, 0.4, 0.45, 0.5, 0.55, 0.6, or a value falling within a range formed by any two thereof.

When the volume median Dv₅₀ of the negative active material is controlled to fall within an appropriate range, the diffusion path of the active ions can be shortened, and it is convenient to form a smooth pore structure in the negative active material layer. Therefore, the negative electrode plate can exhibit both good liquid-phase transport performance and good solid-phase diffusion performance of active ions simultaneously. In addition, without intending to be limited by any theory or explanation, the applicant hereof unexpectedly finds that, when the length-number mean diameter Dn₁₀ and the Dv₅₀ of the carbon-containing silicon-oxygen composite particle satisfy the above conditions, the capacity of the negative active material can be exerted favorably, and it is ensured that the secondary battery exhibits high C-rate performance and high cycle stability.

In some embodiments, a powder compaction density of the carbon-containing silicon-oxygen composite particle under a 5000 kg pressure may be 1.21 g/cm³ to 1.50 g/cm³. Specifically, the powder compaction density of the carbon-containing silicon-oxygen composite particle under a 5000 kg pressure may be 1.21 g/cm³ to 1.48 g/cm³, 1.25 g/cm³ to 1.45 g/cm³, 1.30 g/cm³ to 1.42 g/cm³, or 1.35 g/cm³ to 1.40 g/cm³. In some embodiments, the powder compaction density of the carbon-containing silicon-oxygen composite particle under a 5000 kg pressure may be 1.21 g/cm³, 1.25 g/cm³, 1.28 g/cm³, 1.31 g/cm³, 1.35 g/cm³, 1.38 g/cm³, 1.41 g/cm³, 1.45 g/cm³, 1.48 g/cm³, 1.50 g/cm³, or a value falling within a range formed by any two thereof.

When the powder compaction density of the carbon-containing silicon-oxygen composite particle under a 5000 kg pressure falls within the specified range, a close contact is enabled between particles in the negative active material layer, thereby increasing the content of active material per unit volume, and in turn, increasing the energy density of the battery.

The negative current collector of the negative electrode plate is not particularly limited in this application. The negative current collector may be made of a metal foil or a porous metal sheet, for example, a foil or porous plate made of metal such as copper, nickel, titanium, or iron, or an alloy thereof. As an example, the negative current collector is a copper foil.

In some embodiments, the negative current collector includes two sides opposite to each other in a thickness direction of the current collector. The negative active material layer may be disposed on one side or both sides of the negative current collector. For example, the negative current collector includes two sides opposite to each other in the thickness direction of the current collector. The negative active material layer is disposed on one or both of the two opposite sides of the negative current collector.

In some embodiments, the negative active material layer may include other negative active materials different from the carbon-containing silicon-oxygen composite particle. The specific type of other negative active materials is not particularly limited, and may be selected as required. As an example, other negative active materials include but are not limited to at least one of natural graphite, artificial graphite, mesocarbon microbead (MCMB), hard carbon, soft carbon, silicon, a silicon-carbon composite, SiO, a Li-Sn alloy, a Li-Sn-O alloy, Sn, SnO, SnO₂, spinel-structured Li₄Ti₅O₁₂, or a Li-Al alloy.

In some embodiments, the negative active material layer further optionally includes a binder. The binder may be at least one selected from polyacrylate, polyimide, polyamide, polyamide imide, polyvinylidene difluoride, styrene butadiene rubber, sodium alginate, polyvinyl alcohol, polytetrafluoroethylene, polyacrylonitrile, sodium carboxymethyl cellulose, potassium carboxymethyl cellulose, sodium hydroxypropyl cellulose, or potassium hydroxypropyl cellulose.

In some embodiments, the negative active material layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative active material layer further optionally includes other agents, such as a thickener (for example, sodium carboxymethyl cellulose (CMC-Na)).

The negative electrode plate in this application may be prepared by a conventional method in this field. For example, a method for preparing the negative electrode plate includes: dispersing the carbon-containing silicon-oxygen composite particles and optionally other negative active materials, a conductive carbon, a binder, and a thickener in a solvent such as N-methyl-pyrrolidone (NMP) or deionized water to form a homogeneous negative electrode slurry, coating a negative current collector with the negative electrode slurry, and performing steps such as drying and cold pressing to obtain a negative electrode plate.

It is hereby noted that the parameters of the negative active material layer described herein mean the parameters of a negative active material layer on a single side of the negative current collector. When the negative active material layer is disposed on both sides of the negative current collector, the parameter settings are considered to fall within the protection scope of this application as long as the parameters of the negative active material layer on any one side of the negative current collector satisfy the parameter ranges specified herein.

In addition, the negative electrode plate according to this application does not exclude other additional functional layers different from the negative active material layer. For example, in some embodiments, the negative electrode plate according to this application further includes a conductive undercoat layer (for example, formed of a conductive agent and a binder) disposed on a surface of the negative current collector and sandwiched between the negative current collector and the negative active material layer. In some other embodiments, the negative electrode plate according to this application further includes a protection layer overlaying the surface of the negative active material layer.

In this application, the XRD pattern may be obtained using a method and instrument known in the art. For example, the XRD pattern may be obtained by using an X' Pert Pro MPD X-ray diffractometer. The radiation source for the XRD test is a Cu target, and the test parameters may be set as follows: the X-ray tube voltage is set to 40 kV, the X-ray tube current is set to 30 mA, the scanning speed is set to 8°/min, and the 2θ range is set to 10° to 80°.

In this application, the Raman spectrogram may be obtained using a method and instrument known in the art. For example, the Raman spectrogram may be obtained in a Raman test performed by using a high-resolution Raman spectrometer HORIBA LabRAM HR Evolution, and specifically, may be obtained in a Raman test performed by using an Ar ion laser as a light source.

In this application, in any region in which the negative active material layer includes the carbon-containing silicon-oxygen composite particle, based on a total mass of carbon, silicon and oxygen, the content of carbon may be determined in an elemental distribution image of a cross-section of the carbon-containing silicon-oxygen composite particle. An exemplary method for determining the carbon content is: sprinkling the carbon-containing silicon-oxygen composite particles onto a copper foil coated with a conductive adhesive; cutting the copper foil to form a specimen that exposes a cross-section, and polishing the specimen by using an ion beam slope cutter (Leica EM TIC 3X-Ion Beam Slope Cutter). Subsequently, placing the copper foil specimen into a scanning electron microscope (SEM) to find a sectioned particle of the negative active material. Cutting the found particle of the negative active material along a direction perpendicular to the cross-section by using a focused ion beam (FIB), so as to obtain a slice containing the cross-section of the negative active material particle. Measuring, by using a transmission electron microscope (TEM) and an energy dispersive X-ray spectrometer (EDS), the mass pencentage of carbon in the aggregate mass of carbon, oxygen, and silicon in a region selected in the slice.

In this application, the thickness of the coating layer on the surface of the carbon-containing silicon-oxygen composite particle bears a meaning known in the art, and may be determined by a method and instrument known in the art. For example, the micromorphology of a specimen may be observed by using a scanning electron microscope (SEM) (for example, in a case of agglomerated particles), so as to characterize the coating status of the surface of the specimen. The test instrument may be OXFORD EDS (X-max-20 mm²) and the accelerating voltage is 10 KV.

In this application, the volume average particle size Dv₅₀ of the carbon-containing silicon-oxygen composite particle, and the length-number mean diameter Dn₁₀ of the carbon-containing silicon-oxygen composite particle bear the meanings known in the art, and may be determined by a method and instrument known in the art. For example, the volume average particle size may be measured by using a laser particle size analyzer (such as Mastersizer 2000E manufactured by Britain-based Malvern Instruments Ltd.) by reference to the GB/T 19077-2016 particle size distribution laser diffraction method.

In this application, the powder compaction density of the carbon-containing silicon-oxygen composite particle under a 5000 kg pressure bears a meaning known in the art, and may be determined by a method known in the art. For example, with reference to the standard GB/T24533-2009, the powder compaction density is determined by using an electronic pressure tester (such as UTM7305). An exemplary test method is: weighing out 1 gram of the carbon-containing silicon-oxygen composite particles, adding the particles into a mold with a bottom area of 1.327 cm², increasing the pressure to 5000 kg, keeping the pressure for 30 s, and then depressurizing and keeping the depressurized state for 10 s, recording the data, and calculating the powder compaction density of the negative active material under a 5000 kg pressure.

It is hereby noted that the parameters for the negative active material layer or the negative active material particles may be sampled and tested during preparation of the battery, or may be sampled and tested among the prepared secondary batteries.

As an example, when the specimen is taken from a prepared secondary battery, the sampling may be performed according to the following steps S10 to S30:
S10. Discharging the secondary battery (for safety reasons, the battery is generally caused to be in a fully discharged state); disassembling the battery and taking out a negative electrode plate; soaking the negative electrode plate in dimethyl carbonate (DMC) for a period (for example, 2 to 10 hours); and then taking out the negative electrode plate, drying the negative electrode plate at a specified temperature for a specified time (for example, at 60 °C for 4 hours), and taking out the dried negative electrode plate. At this time, specimens may be taken from the dried negative electrode plate to test various relevant parameters of the negative active material of this application.
S20. Baking, at a specified temperature for a specified time (for example, at 400 °C for 2 hours), the negative electrode plate dried in step S10; selecting a region on the baked negative electrode plate randomly, and taking specimens of the negative active material (for example, by scraping powder with a scraper).
S30. Sieving the negative active material collected in step S20 (for example, through a 200-mesh sieve) to finally obtain specimens available for testing the parameters of the negative active material of this application.

### Electrochemical device

A second aspect of this application provides an electrochemical device. The electrochemical device may be any device in which an electrochemical reaction occurs to implement conversion between chemical energy and electrical energy. Specific examples of the electrochemical device include all kinds of lithium primary batteries or lithium secondary batteries. Particularly, the lithium secondary batteries include a lithium metal secondary battery, a lithium-ion secondary battery, a lithium polymer secondary battery, or a lithium-ion polymer secondary battery.

In some embodiments, the electrochemical device according to this application includes a positive electrode plate, a negative electrode plate, a separator, and an electrolyte solution.

In some embodiments, the positive electrode plate, the negative electrode plate, and the separator may be made into an electrode assembly by winding or stacking.

The electrochemical device according to this application further includes an outer package configured to package the electrode assembly and the electrolyte solution. In some embodiments, the outer package may be a hard shell such as a hard plastic shell, an aluminum shell, a steel shell, or the like; or, may be a soft package such as a pouch-type package. The soft package may be made of a material such as at least one of polypropylene (PP), polybutylene terephthalate (PBT), or polybutylene succinate (PBS).

### [Negative electrode plate]

The negative electrode plate used in the electrochemical device according to this application is the negative electrode plate according to the first aspect of this application.

### [Positive electrode plate]

The material, composition, and manufacturing method of the positive electrode plate used in the electrochemical device according to this application may include any technology known in the prior art.

The positive electrode plate includes a positive current collector and a positive active material layer disposed on at least one surface of the positive current collector and containing a positive active material. As an example, the positive current collector includes two surfaces opposite to each other in a thickness direction of the current collector. The positive active material layer is disposed on one or both of the two opposite surfaces of the positive current collector.

In some embodiments, the positive active material layer includes a positive active material. The specific type of the positive active material is not particularly limited, and may be selected as required. As an example, the positive active material may include one or more of lithium transition metal oxide, olivine-structured lithium-containing phosphate, or a modified compound thereof. In the electrochemical device according to this application, the modified compound of each positive active material described above may be formed by modifying the positive active material, for example, by doping, surface coating, or both doping and surface coating.

As an example, the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or a modified compound thereof. As an example, the olivine-structured lithium-containing phosphate may include one or more of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, or a modified compound thereof. Of such positive active materials, one may be used alone, or at least two may be used in combination.

In some embodiments, the positive active material layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive active material layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive current collector may be a metal foil or a composite current collector. As an example of the metal foil, the positive current collector may be an aluminum foil. The composite current collector may include a polymer material substrate and a metal material layer formed on at least one surface of the polymer material substrate. As an example, the metal material may be one or more selected from aluminum, aluminum alloy, nickel, nickel alloy, titanium, titanium alloy, silver, or silver alloy. As an example, the polymer material substrate may be selected from polypropylene, polyethylene terephthalate, polybutylene terephthalate, polystyrene, polyethylene, or the like.

The positive electrode plate in this application may be prepared by a conventional method in this field. For example, the positive active material layer is typically formed by coating a positive current collector with a positive electrode slurry and then performing drying and cold calendering. The positive electrode slurry is generally formed by dispersing a positive active material, an optional conductive agent, an optional binder, and any other ingredients into a solvent and then stirring well. The solvent may be, but without being limited to, N-methyl-pyrrolidone (NMP).

The positive electrode plate according to this application does not exclude other additional functional layers different from the positive active material layer. For example, in some embodiments, the positive electrode plate according to this application further includes a conductive undercoat layer (for example, formed of a conductive agent and a binder) disposed on a surface of the positive current collector and sandwiched between the positive current collector and the positive active material layer. In other embodiments, the positive electrode plate according to this application further includes a protection layer overlaying the surface of the positive active material layer.

### [Electrolyte solution]

The electrolyte solution serves to conduct active ions between the positive electrode plate and the negative electrode plate. The electrolyte solution for use in the electrochemical device of this application may be an electrolyte solution known in the prior art.

In some embodiments, the electrolyte solution includes an organic solvent, a lithium salt, and optionally a binder. The types of the organic solvent, the lithium salt, and the additive are not particularly limited, and may be selected according to actual needs.

In some embodiments, as an example, the lithium salt includes but is not limited to at least one of lithium hexafluorophosphate (LiPF₆), (lithium tetrafluoroborate (LiBF₄), lithium perchlorate (LiClO₄), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato) borate (LiBOB), lithium difluorophosphate (LiPO2F₂), lithium difluoro(bisoxalato) phosphate (LiDFOP), and lithium tetrafluoro(oxalato) phosphate (LiTFOP). Of the foregoing lithium salts, one may be used alone, or two or more may be used simultaneously.

In some embodiments, as an example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE). Of the foregoing organic solvents, one may be used alone, or two or more may be used simultaneously. Optionally, two or more of the foregoing organic solvents are used simultaneously.

In some embodiments, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

As examples, such additives include, but are not limited to, at least one of fluoroethylene carbonate (FEC), vinylene carbonate (VC), vinyl ethylene carbonate (VEC), ethylene sulfate (DTD), propylene sulfate, ethylene sulfite (ES), 1,3-propane sultone (PS), 1,3-propene sultone (PST), sulfonate cyclic quaternary ammonium salt, succinic anhydride, succinonitrile (SN), adiponitrile (ADN), tris(trimethylsilane) phosphate (TMSP), or tris(trimethylsilane) borate (TMSB).

The electrolyte solution may be prepared by a conventional method in this field. For example, the electrolyte solution may be obtained by mixing well an organic solvent, a lithium salt, and an optional additive. The order of adding the ingredients is not particularly limited. For example, the lithium salt and the optional additive may be added together to the organic solvent and mixed well to obtain the electrolyte solution; or, the lithium salt may be added to the organic solvent, and then the optional additive is added into the organic solvent and mixed well to obtain the electrolyte solution.

### [Separator]

Disposed between the positive electrode plate and the negative electrode plate, the separator primarily serves to prevent a short circuit between the positive electrode plate and the negative electrode plate while allowing passage of active ions. The type of the separator is not particularly limited in this application, and may be any well-known porous separator that is highly stable both chemically and mechanically.

In some embodiments, the material of the separator may be one or more selected from, but without being limited to, glass fibers, non-woven fabric, polyethylene, polypropylene, or polyvinylidene fluoride. The separator may be a single-layer film or a multilayer composite film. When the separator is a multilayer composite film, materials of different layers may be identical or different. In some embodiments, the separator may be coated with a ceramic coating or a metal oxide coating.

### Electronic device

A third aspect of this application provides an electronic device. The electronic device includes the electrochemical device according to the second aspect of this application.

The electronic device is not particularly limited in this application, and may be any electronic device known in the prior art. In some embodiments, the electronic device may include, but not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

### Embodiments

The following embodiments are more detailed descriptions of the subject-matter disclosed herein. The embodiments are merely intended as illustrative descriptions because, evidently, a person skilled in the art may make various modifications and changes to such embodiments without departing from the disclosure hereof. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

### Embodiments 1 to 6

### Preparing negative active material particles

Mixing 15 kg of SiO₂ and 7 kg of Si well, and placing the mixture in an acetylene gas stream that flows at a flow rate of v₁ L/min. Controlling the reaction system to heat up to 1300 °C at a speed of 5 °C/min, and keeping the temperature constant for 5 hours to obtain carbon-containing silicon-oxygen composite particles.

The carbon-containing silicon-oxygen composite particles are the negative active material particles in Embodiments 1 to 6.

The flow rate v₁ of the acetylene gas stream in Embodiments 1 to 6 is shown in Table 1.

### Preparing a negative electrode plate

Mixing the negative active material particles and graphite at a mass ratio 15.5: 84.5 to obtain a hybrid negative active material. Mixing the hybrid negative active material with polyacrylic acid (PAA) as a binder and carbon black as a conductive agent at a mass ratio of 95.9: 2.8: 1.3, adding an appropriate amount of deionized water as a solvent, stirring the solution with a vacuum mixer to obtain a negative electrode slurry, applying the negative electrode slurry evenly onto both surfaces of a negative current collector copper foil, drying the current collector in a 120 °C oven, and then performing steps such as cold-pressing and slitting to obtain a negative electrode plate.

### Preparing a positive electrode plate

Mixing the positive active material LiCoO₂, PVDF as a binder, and carbon black as a conductive agent at a mass ratio of 92.6: 5.0: 1.3: 1.1, adding an appropriate amount of NMP solvent, stirring the solution with a vacuum mixer to obtain a positive electrode slurry, applying the positive electrode slurry evenly onto both surfaces of the positive current collector aluminum foil, and then performing drying the current collector in a 120 °C oven, and performing steps such as cold-pressing and slitting to obtain a positive electrode plate.

### Preparing an electrolyte solution

Mixing ethylene carbonate (EC), ethyl methyl carbonate (EMC), and diethyl carbonate (DEC) at a volume ratio of 1: 1: 1 to obtain an organic solvent. Dissolving LiPF₆ in the organic solvent, and then adding fluoroethylene carbonate (FEC) and stirring well to obtain an electrolyte solution. In the electrolyte solution, the concentration of LiPF₆ is 1 mol/L. Based on the total mass of the electrolyte solution, the mass pencentage of the fluoroethylene carbonate is 5%.

### Preparing a separator

Using a 14 µm-thick porous polypropylene film (manufactured by Celgard) as a separator.

### Preparing a secondary battery

Stacking the positive electrode plate, the separator, and the negative electrode plate sequentially, and winding the stacked structure to obtain an electrode assembly. Placing the electrode assembly into an outer package, injecting the electrolyte solution, and performing steps such as sealing, standing, chemical formation, and shaping to obtain a secondary battery.

### Embodiments 7 to 15

### Preparing negative active material particles

Mixing 15 kg of SiO₂ and 7 kg of Si well, and placing the mixture in an acetylene gas stream that flows at a flow rate of v₁ L/min. Controlling the reaction system to heat up to 1300 °C at a speed of 5 °C/min, and keeping the temperature constant for 5 hours, and then reducing the temperature to obtain uncoated carbon-containing silicon-oxygen composite particles.

Performing surface coating for the uncoated carbon-containing silicon-oxygen composite particles to obtain coated carbon-containing silicon-oxygen composite particles.

The coated carbon-containing silicon-oxygen composite particles are the negative active material particles in Embodiments 7 to 15.

The surface coating process in Embodiments 7 to 11 includes: placing the uncoated carbon-containing silicon-oxygen composite particles in a first hybrid gas stream, controlling the first hybrid gas stream to heat up to 1000 °C at a speed of 5 °C/min, and keeping the temperature constant for 2 hours; and then replacing the first hybrid gas stream with a second hybrid gas stream, controlling the second hybrid gas stream to heat up to 1000 °C at a speed of 5 °C/min, and keeping the temperature constant for 2 hours. The first hybrid gas stream is a gas stream formed by mixing methane at a flow rate of 1.5 L/min and argon at a flow rate of 2 L/min, and the second hybrid gas stream is a gas stream formed by mixing propylene at a flow rate of 0.5 L/min and argon at a flow rate of 2 L/min.

The surface coating process in Embodiments 12 and 13 includes: placing the uncoated carbon-containing silicon-oxygen composite particles in a third hybrid gas stream, controlling the third hybrid gas stream to heat up to T °C at a speed of 5 °C/min, and keeping the temperature constant for 1.5 hours. The third hybrid gas stream is a gas stream formed by mixing acetylene at a flow rate of 0.5 L/min and argon at a flow rate of 2 L/min. In Embodiment 12, T = 800. In Embodiment 13, T = 1000.

The surface coating process in Embodiment 14 includes: placing the uncoated carbon-containing silicon-oxygen composite particles with MeTₙ in a solvent that contains both an organic solvent (ethanol) and deionized water, so as to form a mixed solution. Drying the mixed solution to obtain powder, and then sintering the powder at approximately 250 °C to 900 °C for approximately 0.5 to 24 hours. In the mixed solution, Me includes at least one of Mg, Al, Ti, Zn, Ni, Mn, V, Cr, Co, or Zr; T includes at least one of methoxy, ethoxy, isopropoxy, or halogen; and n is 1, 2, 3, or 4.

The surface coating process in Embodiment 15 includes: dispersing the uncoated carbon-containing silicon-oxygen composite particles and a conductive polymer in a solvent at a high speed for 1 to 12 hours to obtain a suspension, and then removing the solvent in the suspension. The conductive polymer includes one or more of polyvinylidene difluoride or a derivative thereof, carboxymethyl cellulose or a derivative thereof, polyvinylpyrrolidone or a derivative thereof, polyvinyl alcohol or a derivative thereof, polyacrylic acid or a derivative thereof, polystyrene-butadiene rubber, polyacrylamide, polyimide, PEDOT:PSS or a derivative thereof, or polyamideimide. The solvent is formed by mixing ethanol, methanol, isopropanol, or any combination thereof at any ratio.

The flow rate v₁ of the acetylene gas stream in Embodiments 7 to 15 is shown in Table 1.

The preparation processes of the negative electrode plate, the positive electrode plate, the electrolyte solution, the separator, and the secondary battery in Embodiments 7 to 15 are the same as those in Embodiments 1 to 6.

### Comparative Embodiment 1

### Preparing negative active material particles

Mixing 15 kg of SiO₂ and 7 kg of Si well, and placing the mixture in a vacuum environment. Controlling the reaction system to heat up to 1300 °C at a speed of 5 °C/min, and keeping the temperature constant for 5 hours to obtain the negative active material particles in Comparative Embodiment 1.

The preparation processes of the negative electrode plate, the positive electrode plate, the electrolyte solution, the separator, and the secondary battery in Comparative Embodiment 1 are the same as those in Embodiments 1 to 6.

### Comparative Embodiments 2 to 6

### Preparing negative active material particles

Mixing 15 kg of SiO₂ and 7 kg of Si well, and placing the mixture in an argon gas stream. Controlling the reaction system to heat up to 1300 °C at a speed of 5 °C/min, and keeping the temperature constant for 5 hours to obtain silicon-oxygen composite particles.

Performing surface coating for the silicon-oxygen composite particles to obtain negative active material particles.

The surface coating process in Comparative Embodiment 2 is the same as that in Embodiments 7 to 11; the surface coating process in Comparative Embodiment 3 is the same as that in Embodiment 12; the surface coating process in Comparative Embodiment 4 is the same as that in Embodiment 13; the surface coating process in Comparative Embodiment 5 is the same as that in Embodiment 14; and the surface coating process in Comparative Embodiment 6 is the same as that in Embodiment 15.

The preparation processes of the negative electrode plate, the positive electrode plate, the electrolyte solution, the separator, and the secondary battery in Comparative Embodiments 2 to 6 are the same as those in Embodiments 1 to 6.

### Comparative Embodiment 7

Preparing the negative active material particles, the negative electrode plate, the positive electrode plate, the electrolyte solution, the separator, and the secondary battery in Comparative Embodiment 7 by adjusting the flow rate v₁ of the acetylene gas stream with reference to Table 1 based on the preparation process of the negative active material particles in Embodiments 7 to 11 as well as the preparation processes of the negative electrode plate, the positive electrode plate, the electrolyte solution, the separator, and the secondary battery in Embodiments 1 to 6.

### Comparative Embodiment 8

Preparing the negative active material particles, the negative electrode plate, the positive electrode plate, the electrolyte solution, the separator, and the secondary battery in Comparative Embodiment 8 by adjusting the flow rate v₁ of the acetylene gas stream with reference to Table 1 based on the preparation processes of the negative active material particles, the negative electrode plate, the positive electrode plate, the electrolyte solution, the separator, and the secondary battery in Embodiments 1 to 6.

### Test Part

### Testing negative active material particles

### (1) Measuring the carbon content in the bulk phase of the negative active material particles

The carbon content in the bulk phase of the negative active material particles is defined as a mass pencentage of carbon doped into the bulk phase of the negative active material particles based on the total mass of the negative active material particles.

### Testing instrument: DK-606 carbon sulfur analyzer

Adding 0.8 gram of tungsten-tin-iron hybrid flux at the bottom of a crucible, so that the flux evenly covers the bottom of the crucible; adding 0.5 gram of negative active material powder, where the negative active material powder is obtained by grinding the negative active material particles; laying 0.8 gram of tungsten-tin-iron hybrid flux evenly over the surface of the negative active material powder; placing the crucible onto a quartz crucible holder by using a crucible gripper; and measuring the carbon content by using a high-frequency infrared carbon sulfur analyzer, where the test parameters are set as follows: the oxygen pre-feeding duration is set to 20 s, the top oxygen feeding duration is set to 50 s, the oxygen flow rate is set to 1.8 L/min, the carbon cutoff level is set to 10%, the analysis duration is set to 20 to 50 seconds, and the analysis oxygen flow rate is set to 2.0 L/min.

### (2) XRD test for the negative active material particles

### Test instrument: X' Pert Pro MPD X-ray diffractometer

Loading an appropriate amount of negative active material powder into a groove of a specimen holder. Spreading the negative active material powder flat by using an angular spoon, and then gently pressing the surface of the specimen by using a microscope slide, so as to keep the height consistent between the powder surface and the surface of the specimen holder, and then starting the XRD test. The radiation source for the XRD test is a Cu target, and the test parameters are set as follows: the X-ray tube voltage is set to 40 kV, the X-ray tube current is set to 30 mA, the scanning speed is set to 8°/min, and the 2θ range is set to 10° to 80°. In the resulting XRD pattern, I₃ is an intensity of a highest characteristic diffraction peak corresponding to a diffraction angle 2θ of 28.3±0.5°, and I₄ is an intensity of a highest characteristic diffraction peak corresponding to 2θ of 22.5±0.3°.

### (3) Raman test for the negative active material particles

Test instrument: HORIBA LabRAM HR Evolution high-resolution Raman spectrometer

Placing a small amount of negative active material powder onto a microscope slide, gently pressing the powder flat by using a microscope slide, and then starting the Raman test, where an Ar ion laser is used as a light source, and an excitation wavelength is 532 nm. The intensities of the peaks with a Raman shift of approximately 1300 cm⁻¹ and 1580 cm⁻¹ in the resulting Raman spectrum plot are denoted as I_{D} and I_{G}, respectively.

### (4) Testing elemental distribution in a cross-section of negative active material particles

Test instrument: Leica EM TIC 3X - Ion Beam Slope Cutter, scanning electron microscope (SEM), transmission electron microscope (TEM), energy dispersive X-ray spectrometer (EDS).

An exemplary method for determining the elemental distribution is: sprinkling the negative active material particles onto a copper foil coated with a conductive adhesive; cutting the copper foil to form a specimen that exposes a cross-section, and polishing the specimen by using an ion beam slope cutter (Leica EM TIC 3X-Ion Beam Slope Cutter). Subsequently, placing the copper foil specimen into a scanning electron microscope (SEM) to find a sectioned particle of the negative active material. Cutting the found particle of the negative active material along a direction perpendicular to the cross-section by using a focused ion beam (FIB), so as to obtain a slice containing the cross-section of the negative active material particle. Measuring, by using a transmission electron microscope (TEM) and an energy dispersive X-ray spectrometer (EDS), the mass pencentage of carbon in the aggregate mass of carbon, oxygen, and silicon in a region selected in the slice.

### XRD test for the negative electrode plate

### Test instrument: X' Pert Pro MPD X-ray diffractometer

Preparing a secondary battery from a negative electrode plate. Charging and discharging the secondary battery for 10 cycles in a dry room in which the temperature is 21±5 °C and the humidity is less than or equal to 1.7%, until the battery is fully charged. Disassembling the battery, and taking the negative electrode plate out. Soaking the negative electrode plate in dimethyl carbonate for 1 hour, and then taking out and oven-drying the negative electrode plate. Cutting the dried negative electrode plate into square specimens with both length and width being 0.5 cm. Affixing transparent adhesive tape to both sides of the square specimen to isolate air. Performing an XRD test for the square specimen, where the radiation source is a Cu target, and the test parameters are set as follows: the X-ray tube voltage is set to 40 kV, the X-ray tube current is set to 30 mA, the scanning speed is set to 8 °/min, and the 2θ angle ranges from 10° to 80°. In the resulting XRD pattern, I₁ is an intensity of a highest characteristic diffraction peak corresponding to a diffraction angle 2θ of 31.9±0.5°, and I₂ is an intensity of a highest characteristic diffraction peak corresponding to 2θ of 21.5±0.5°.

### Testing the secondary battery

### (1) Testing the cycle capacity retention rate of the secondary battery

Charging the secondary battery in a 25 °C environment at a constant current of 0.7 C until the voltage reaches 4.48 V, charging the battery at a constant voltage until the current drops to 0.025 C, leaving the battery to stand for 5 minutes, and then discharging the battery at 0.5 C until the voltage reaches 3.0 V, thereby completing a charge-discharge cycle. Recording the discharge capacity at this time as a 1^{st}-cycle discharge capacity, that is, first-cycle capacity. Repeating the above charging and discharging operations for the secondary battery for a specified number of cycles, and recording the discharge capacity at the end of each cycle. Calculating a ratio of the discharge capacity at the end of each cycle to the first-cycle capacity to obtain a series of ratios. Plotting a cycle capacity retention rate curve of the secondary battery based on the ratios.

### (2) Testing the full-charge expansion rate of the secondary battery

Measuring the thickness of a prepared secondary battery with a screw micrometer, denoted as D₁. Cycling the secondary battery at 25 °C by performing the following operations: Charging the battery at a constant current of 0.7 C until the voltage reaches 4.48 V, and then charging the battery at a constant voltage until the current drops to 0.025 C, leaving the battery to stand for 5 minutes, and then discharging the battery at a current of 0.5 C until the voltage reaches 3.0 V Measuring the thickness of a secondary battery with a screw micrometer when the battery is in a fully charged state after n cycles, where the thickness is denoted as Dₙ. Full-charge expansion rate of secondary battery Pₙ = [(Dₙ - D₁)/D₁] × 100%. 500^{th}-cycle full-charge expansion rate of secondary battery P₅₀₀ = [(D₅₀₀ - D₁)/D₁] × 100%.

Plotting a full-charge expansion rate curve of the secondary battery by using the number of cycles of the secondary battery as abscissa and the full-charge expansion rate as ordinate, where the curve reflects the full-charge expansion rate of the secondary battery corresponding to different numbers of cycles.

The test results of the negative active material particles are detailed in Table 1. The XRD test results of the negative electrode plate and the test results of the secondary battery are detailed in Table 2. In Table 1 and Table 2, "/" means omission of the corresponding operation or unavailability of the corresponding parameter.

**Table 1**

| Serial number | v₁ | Carbon content in bulk phase (%) | I₃/I₄ | I_{D}/I_{G} |
|---|---|---|---|---|
| Embodiment 1 | 0.5 | 1.2 | 1.8 | / |
| Embodiment 2 | 1.0 | 2.6 | 1.5 | / |
| Embodiment 3 | 1.5 | 5.5 | 1.4 | / |
| Embodiment 4 | 2.0 | 7.1 | 1.7 | / |
| Embodiment 5 | 2.5 | 9.4 | 1.4 | / |
| Embodiment 6 | 3.0 | 10.8 | 1.1 | / |
| Embodiment 7 | 1.0 | 1.2 | 2.3 | 1.5 |
| Embodiment 8 | 1.5 | 2.6 | 2.1 | 1.6 |
| Embodiment 9 | 2.0 | 5.5 | 1.3 | 1.5 |
| Embodiment 10 | 2.5 | 7.1 | 1.2 | 1.5 |
| Embodiment 11 | 3.0 | 9.4 | 0.9 | 1.6 |
| Embodiment 12 | 1.5 | 2.6 | 2.0 | 1.5 |
| Embodiment 13 | 1.5 | 2.6 | 2.1 | 1.3 |
| Embodiment 14 | 1.5 | 2.6 | 1.9 | / |
| Embodiment 15 | 1.5 | 2.6 | 1.7 | / |
| Comparative Embodiment 1 | / | 0 | 3.6 | / |
| Comparative Embodiment 2 | / | 0 | 2.6 | 1.5 |
| Comparative Embodiment 3 | / | 0 | 2.5 | 0.9 |
| Comparative Embodiment 4 | / | 0 | 2.6 | 1.1 |
| Comparative Embodiment 5 | / | 0 | 2.7 | / |
| Comparative Embodiment 6 | / | 0 | 2.6 | / |
| Comparative Embodiment 7 | 0.5 | 0.9 | 2.4 | 1.4 |
| Comparative Embodiment 8 | / | 0 | 3.1 | / |

**Table 2**

| Serial number | I₁/I₂ | 500^{th}-cycle capacity retention rate (%) | P₅₀₀ (%) |
|---|---|---|---|
| Embodiment 1 | 1.0 | 82 | 10.1 |
| Embodiment 2 | 1.3 | 83 | 9.4 |
| Embodiment 3 | 1.9 | 84 | 9.3 |
| Embodiment 4 | 2.1 | 83 | 9.1 |
| Embodiment 5 | 2.4 | 83 | 8.8 |
| Embodiment 6 | 2.5 | 86 | 8.6 |
| Embodiment 7 | 1.1 | 85 | 9.3 |
| Embodiment 8 | 1.8 | 86 | 8.9 |
| Embodiment 9 | 2.7 | 90 | 8.7 |
| Embodiment 10 | 2.9 | 85 | 8.5 |
| Embodiment 11 | 3.0 | 84 | 8.4 |
| Embodiment 12 | 1.6 | 85 | 8.6 |
| Embodiment 13 | 2.0 | 82 | 9.0 |
| Embodiment 14 | 2.4 | 83 | 9.5 |
| Embodiment 15 | 2.8 | 84 | 10.3 |
| Comparative Embodiment 1 | 0.3 | 62 | 20.5 |
| Comparative Embodiment 2 | 0.9 | 59 | 12.1 |
| Comparative Embodiment 3 | 0.7 | 77 | 19.7 |
| Comparative Embodiment 4 | 0.6 | 72 | 16.4 |
| Comparative Embodiment 5 | 0.5 | 78 | 15.3 |
| Comparative Embodiment 6 | 0.4 | 70 | 17.1 |
| Comparative Embodiment 7 | 0.5 | 80 | 10.8 |
| Comparative Embodiment 8 | 3.2 | 64 | 18.0 |

When the I₁/I₂ ratio value of the negative electrode plate satisfies 1 ≤ I₁/I₂ ≤ 3, the negative electrode plate endows the battery with a good cycle capacity retention rate and an acceptable expansion rate. A possible reason is that, the ratio value satisfies 1 ≤ I₁/I₂ ≤ 3, the specified constituents in the negative electrode plate facilitate the mass transfer process in an electrochemical reaction, and suppress the expansion of the Si microcrystals to some extent.

As can be seen from the test results of Comparative Embodiments 12 and 13, when the coating process is performed at a lower temperature, the I₃/I₄ ratio value of the negative active material particles decreases. This may mean that the silicon microcrystals formed inside the particles are smaller in size, thereby further reducing the volume expansion of the negative active material during lithiation and delithiation, and in turn, enhancing the cycle stability of the secondary battery.

As can be seen from Embodiments 1 to 6 versus Comparative Embodiment 1 as well as Embodiments 7 to 15 versus Comparative Embodiments 2 to 6, if the bulk phase of the silicon-oxygen composite particles is not doped with carbon, the silicon-oxygen composite particles exhibit a larger I₃/I₄ ratio value. This indicates that the size of the silicon microcrystals increases significantly when the coating process occurs at a high temperature. In addition, the silicon microcrystals grow up gradually during the cycling, thereby causing significant expansion of the negative active material particles, and even leading to particle fragmentation, and in turn, deteriorating the volume expansion and cycle performance of the secondary battery. Doping the silicon-oxygen composite particles with carbon inside the particles can effectively suppress the size growth of silicon microcrystals, thereby reducing the volume expansion of the secondary battery and enhancing the cycling stability of the secondary battery.

In summary, doping the bulk phase of the silicon-oxygen composite particles with carbon can not only suppress the size growth of the silicon microcrystals inside the negative active material particles during coating at a high temperature, but also suppress the degree of volume expansion of the negative active material particles during lithiation, and facilitate the mass transfer process in the electrochemical reaction. In addition, by controlling the I₁/I₂ ratio value in the XRD pattern of the negative electrode plate to fall within the range specified herein, the cycle capacity retention rate of the secondary battery is increased significantly.

What is described above is merely specific embodiments of this application, but is not intended to limit the protection scope of this application. Various equivalent modifications and replacements conceivable by any person skilled in the art without departing from the technical scope disclosed herein still fall within the protection scope of this application. Therefore, the protection scope of this application is subject to the protection scope of the claims.

## Claims

1. A negative electrode plate, comprising a negative current collector and a negative active material layer located on at least one side of the negative current collector, wherein
the negative active material layer comprises a carbon-containing silicon-oxygen composite particle; and
an X-ray diffraction pattern of the negative electrode plate satisfies: 1 ≤ I₁/I₂ ≤ 3, wherein I₁ is an intensity of a highest characteristic diffraction peak corresponding to a diffraction angle 2θ of 31.9±0.5°, and I₂ is an intensity of a highest characteristic diffraction peak corresponding to 2θ of 21.5±0.5°.

2. The negative electrode plate according to claim 1, wherein an X-ray diffraction pattern of the carbon-containing silicon-oxygen composite particle satisfies: I₃/I₄ ≤ 2, wherein I₃ is an intensity of a highest characteristic diffraction peak corresponding to 2θ of 28.3±0.5°, and I₄ is an intensity of a highest characteristic diffraction peak corresponding to 2θ of 22.5±0.3°.

3. The negative electrode plate according to claim 1, wherein a Raman spectrum of the carbon-containing silicon-oxygen composite particle satisfies: I_{D} > I_{G}, wherein I_{D} is an intensity of a D-band peak, and I_{G} is an intensity of a G-band peak, and optionally 1.1 ≤ I_{D}/I_{G} ≤ 2.0.

4. The negative electrode plate according to claim 1, wherein, in any region in which the negative active material layer comprises the carbon-containing silicon-oxygen composite particle, based on a total mass of carbon, silicon and oxygen, a content of carbon is 0.5% to 10%.

5. The negative electrode plate according to any one of claims 1 to 4, wherein at least a partial region on a surface of the carbon-containing silicon-oxygen composite particle further comprises a coating layer, and the coating layer comprises at least one of a conductive polymer, a carbon material, or an oxide MeO_{z}, wherein Me is a metal element and z = 0.5 to 3; and
the negative electrode plate satisfies at least one of:
(1) the conductive polymer comprises one or more of polyvinylidene difluoride or a derivative thereof, carboxymethyl cellulose or a derivative thereof, polyvinylpyrrolidone or a derivative thereof, polyvinyl alcohol or a derivative thereof, polyacrylic acid or a derivative thereof, styrene-butadiene rubber, polyacrylamide, polyimide, PEDOT:PSS or a derivative thereof, or polyamideimide;
(2) the carbon material comprises one or more of carbon fibers, carbon nanotubes, graphene, graphite, or amorphous carbon; or
(3) Me comprises at least one of Mg, Al, Ti, Zn, Ni, Mn, V, Cr, Co, or Zr.

6. The negative electrode plate according to claim 5, wherein a thickness of the coating layer is 0.1 nm to 10 nm, and optionally 1 nm to 3 nm.

7. The negative electrode plate according to any one of claims 1 to 4, wherein a volume average particle size Dv₅₀ of the carbon-containing silicon-oxygen composite particle is 2.5 µm to 10 µm, and a length-number mean diameter Dn₁₀ of the carbon-containing silicon-oxygen composite particle and the Dv₅₀ satisfy 0.3 ≤ Dn₁₀/Dv₅₀ <_ 0.6.

8. The negative electrode plate according to any one of claims 1 to 4, wherein a powder compaction density of the carbon-containing silicon-oxygen composite particle under a 5000 kg pressure is 1.21 g/cm³ to 1.50 g/cm³.

9. An electrochemical device, comprising the negative electrode plate according to any one of claims 1 to 8.

10. The electrochemical device according to claim 9, wherein the electrochemical device is a lithium-ion battery.
